# EUROPEAN PATENT APPLICATION

(11) **EP 4 116 759 A1**
(43) Date of publication of application: **11.01.2023**
(21) Application number: 22182573.0
(22) Date of filing: 01.07.2022
(51) Int. Cl.: G02B 27/01

(54) **IMAGE DISPLAY APPARATUS**

(30) Priority: 08.07.2021 JP 2021113213
(71) Applicant: Alps Alpine Co., Ltd., Ota-ku, Tokyo 1458501 (JP)
(72) Inventor: Yuza, Shingo, Iwaki-city, Fukushima (JP)
(74) Representative: Schmitt-Nilson Schraud Waibel Wohlfrom Patentanwälte Partnerschaft mbB

(57) **Abstract**

An image display apparatus includes a display unit having a screen that displays an image, an image generation unit that generates an image to be displayed on the screen, a Fresnel lens disposed at a predetermined distance from the screen, a specular-reflection preventing device that causes a rear surface of the Fresnel lens to be tilted at an angle at which incident light from a user side where a user sees the image is not specularly reflected to the user side, and an image correction unit that corrects image distortion caused by the specular-reflection preventing device.

## Description

The present invention relates to an image display apparatus that displays, through a lens, an image generated based on an image of the rear of a vehicle captured by a camera.

A known automobile electronic mirror system includes a convex or Fresnel lens disposed at a predetermined distance from a front surface of a display unit so that a user can see an image displayed on the display unit through the Fresnel lens (refer to, for example, JP 2018-55075 A). Such an automobile electronic mirror system enables a driver to observe a virtual image at a depth in the same manner as in a traditional rear-view mirror.

In the automobile electronic mirror system disclosed in JP 2018-55075 A, a flat surface of the Fresnel lens (that is opposite a Fresnel surface thereof having a cross-section with serrations) specularly reflects incident light from a user side, and the reflected light enters the field of view of a user, resulting in deterioration in visibility of an image intended to be provided to the user. Such deterioration occurs in a configuration including, instead of the Fresnel lens, a convex lens having a convex surface.

It is an object of the present invention to provide an image display apparatus that reduces deterioration in visibility caused by specular reflection on a lens through which an image is displayed.

The invention relates to an image display apparatus according to the appended claims. Embodiments are disclosed in the dependent claims.

An image display apparatus according to an embodiment of the present invention includes a screen that displays an image, an image generation unit that generates an image to be displayed on the screen, a convex lens disposed at a predetermined distance from the screen, a specular-reflection preventing device that causes the convex lens to have a shape or position that prevents incident light from a user side where a user sees the image through the convex lens from being specularly reflected to the user side, and an image correction unit that corrects image distortion caused by the specular-reflection preventing device.

Adjusting the shape or position of the convex lens can prevent incident light from the user side from being specularly reflected to the user side, thus reducing deterioration in visibility caused by reflection of the user and surroundings of the user in the convex lens.

The specular-reflection preventing device may cause a flat first surface of the convex lens to be non-parallel to a direction perpendicular to a line of sight of the user. Alternatively, the specular-reflection preventing device may cause the convex lens as a whole to be non-parallel to the direction perpendicular to the line of sight of the user. This ensures that the user and surroundings of the user can be prevented from being reflected in an image by specular reflection on the flat surface of the convex lens.

The image correction unit may cause the convex lens to have a shape that removes image distortion, thereby correcting the image distortion. Tilting the first surface of the convex lens or the entire convex lens causes an image displayed on the screen to appear distorted. In designing the lens, the shape of the lens is adjusted to correct distortion. Thus, the user can see a normal image through the convex lens.

The image correction unit may deform an image to be displayed on the screen to remove distortion of the image seen through the convex lens. Tilting the first surface of the convex lens or the entire convex lens causes an image displayed on the screen to appear distorted. An image to be displayed is corrected such that the image appears normal when distorted. Thus, the user can see a normal image through the lens.

The convex lens may be a Fresnel lens having a flat first surface. Alternatively, the convex lens is preferably a convex lens having a flat first surface and a convex second surface. For an image displayed through such a convex lens, deterioration in visibility of the image caused by the flat first surface can be reduced.
Fig. 1 is a diagram illustrating an exemplary configuration of an image display apparatus according to an embodiment of the present invention;
Fig. 2 is a functional block diagram of a rear-view image display processor that operates in response to an image generation program executed by a central processing unit;
Fig. 3 is a diagram illustrating an exemplary configuration including a Fresnel lens having a flat surface (rear surface) tilted non-parallel to a direction perpendicular to the line of sight of a user;
Figs. 4A and 4B are diagrams explaining a distorted image;
Fig. 5 is a diagram illustrating a modification of the configuration in Fig. 3;
Fig. 6 is a diagram explaining a deformed image;
Fig. 7 is a diagram illustrating a modification of the image display apparatus, the modification including a different convex lens; and
Fig. 8 is a diagram illustrating another modification of the image display apparatus, the modification including a different convex lens.

An image display apparatus according to one or more embodiments of the present invention will be described with reference to the drawings.

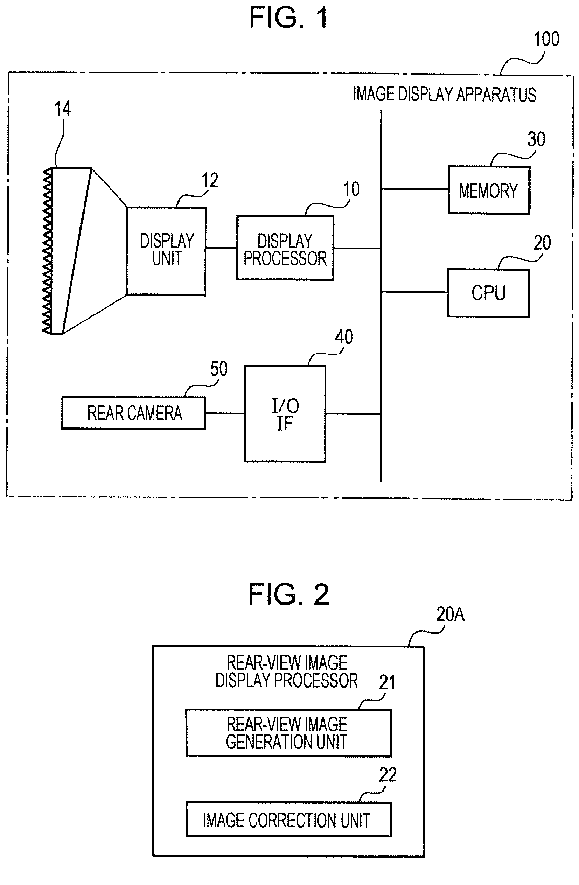

Fig. 1 illustrates an exemplary configuration of an image display apparatus according to an embodiment. As illustrated in Fig. 1, the image display apparatus, 100, according to the present embodiment includes a display processor 10, a display unit 12, a Fresnel lens 14, a central processing unit (CPU) 20, a memory 30, an input-output interface (I/O IF) 40, and a rear camera 50. The image display apparatus 100 implements an electronic mirror system that generates an image (rear-view image) based on a captured image of the rear of a vehicle and displays the generated image instead of a mirror image in a rear-view mirror.

The display processor 10 generates a rear-view image, which is to be displayed on a screen of the display unit 12, by using a part or the whole of an image of the rear of a vehicle captured by the rear camera 50. The display unit 12 has the screen including a liquid display device (LCD). The Fresnel lens 14 has a first surface (rear surface) that is flat and a second surface (front surface) having concentric grooves. The Fresnel lens 14 is disposed at a predetermined distance from the screen of the display unit 12. A user (driver of the vehicle) can see an image displayed by the display unit 12 such that the image is enlarged through the Fresnel lens 14.

The CPU 20 executes a predetermined program stored in the memory 30 to control the entire image display apparatus 100. Furthermore, the CPU 20 generates a rear-view image, which is to be displayed, by using an image captured by the rear camera 50.

The memory 30 stores operation programs of the CPU 20 and is used as a work area to store various pieces of data necessary for an operation of the CPU 20. The operation programs to be executed by the CPU 20 include a program (image generation program) for performing, for example, an operation of generating a rear-view image.

The I/O IF 40 processes input and output of signals (data) from and to various input-output devices including the rear camera 50.

The rear camera 50 is installed at a predetermined position (for example, an upper portion of a rear window) in the back of the vehicle. The rear camera 50 captures an image of a region that is the same as or larger than a region reflected as a mirror image in a rear-view mirror. In this embodiment, the rear-view mirror does not necessarily need to be provided.

Fig. 2 is a functional block diagram of an embodiment of a rear-view image display processor 20A that operates in response to the image generation program executed by the CPU 20. The rear-view image display processor 20A includes a rear-view image generation unit 21 and an image correction unit 22.

The rear-view image generation unit 21 uses an image captured by the rear camera 50 to generate a rear-view image to be displayed on the screen of the display unit 12. The image correction unit 22 reduces distortion of an image that is seen through the Fresnel lens 14.

The above-described rear-view image generation unit 21 corresponds to an image generation unit, the shape and/or position of the Fresnel lens 14 corresponds to specular-reflection preventing means, and the image correction unit 22 and/or the shape of a Fresnel surface of the Fresnel lens 14 corresponds to an image correction unit.

In the image display apparatus 100 according to the embodiment, adjusting the shape or position of the Fresnel lens 14 prevents incident light from a user side from being specularly reflected by the flat surface of the Fresnel lens 14, entering the field of view of a user, and deteriorating visibility of an image intended to be provided to the user. This adjustment may cause distortion of the image. The distortion is corrected by modifying the shape of the Fresnel surface of the Fresnel lens 14, or alternatively, modifying or deforming the image to be displayed on the display unit 12 through the image correction unit 22. An exemplary configuration can be provided depending on a combination of the reduction of deterioration in visibility due to prevention of specular reflection and the distortion correction.

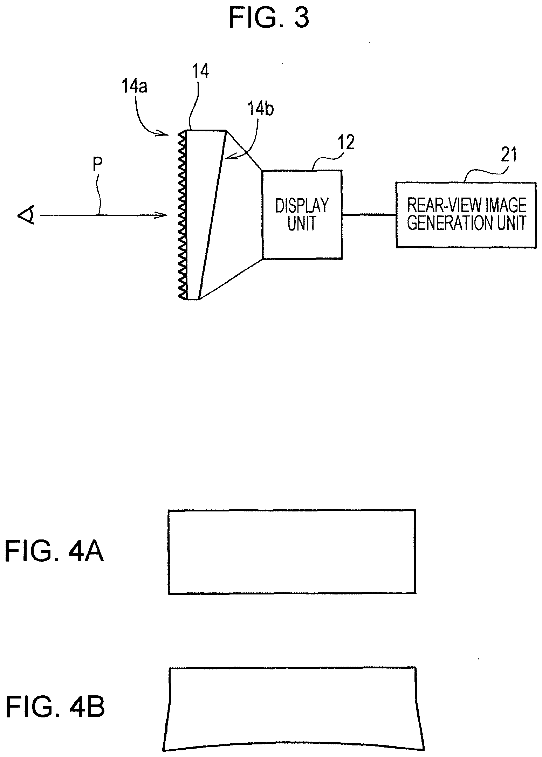

Fig. 3 illustrates an exemplary configuration in which the flat surface (rear surface) of the Fresnel lens 14 is tilted non-parallel to a direction perpendicular to the line of sight of the user. The Fresnel lens 14 in Fig. 3 has a front surface 14a, which is the Fresnel surface having the concentric grooves. The Fresnel surface is oriented perpendicular to the line of sight, or sight line P, of the user viewing the image display apparatus 100. The Fresnel lens 14 has a rear surface 14b, which is oriented non-parallel to (or tilted with respect to) the direction perpendicular to the sight line P. The Fresnel lens 14 having such a shape, in which the rear surface 14b is tilted, allows incident light from the user side to be prevented from being specularly reflected by the flat rear surface 14b and being returned to the user side.

If the Fresnel lens 14 had a Fresnel surface having the same shape (hereinafter, referred to as a "shape A" intended to simply enlarge an image) as that of a Fresnel lens having a constant thickness, the rear-view image generation unit 21 would generate a rectangular image as illustrated in Fig. 4A, and the display unit 12 would display the generated image on the screen, so that the image would appear distorted as illustrated in Fig. 4B when seen by the user. In this exemplary configuration, the front surface 14a (Fresnel surface) of the Fresnel lens 14 is designed to have a shape (hereinafter, referred to as a "shape B") intended not only to enlarge an image but also to restore a distorted image to its original shape with no distortion. For example, the distorted image of Fig. 4B can be restored to a rectangular shape as illustrated in Fig. 4A.

In the above example, adjusting the shape of the Fresnel surface of the Fresnel lens 14 corrects image distortion caused by tilt of the rear surface 14b. Image distortion may be removed as follows. An image to be displayed is previously deformed so that the image, which is seen by the user, has a normal shape when distorted.

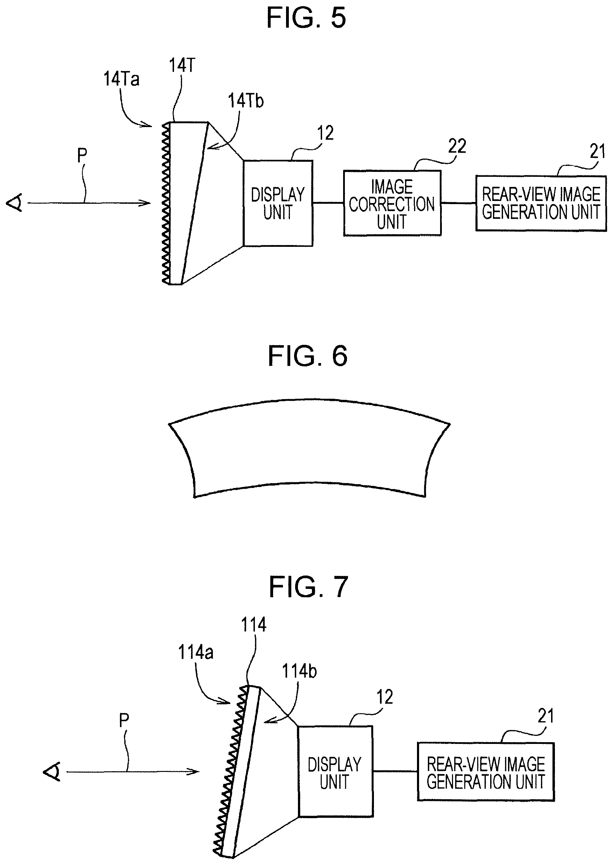

Fig. 5 illustrates an embodiment of a modification of the configuration of Fig. 3. In the configuration of Fig. 5, an image generated by the rear-view image generation unit 21 is inputted to the image correction unit 22. The image correction unit 22 deforms an image to be displayed on the screen of the display unit 12 so that the user can see the image with no distortion through a Fresnel lens 14T.

As described above, in the case where the Fresnel lens 14T has a front surface 14Ta not designed to correct distortion, or a Fresnel surface having the above-described shape A, a rectangular image, as illustrated in Fig. 4A, displayed on the screen of the display unit 12 appears distorted, as illustrated in Fig. 4B, when seen by the user. The image correction unit 22 deforms or alters the shape of the rectangular image outputted from the rear-view image generation unit 21 into an image as illustrated in Fig. 6 to cancel distortion of the image seen by the user.

In the example of Fig. 3, the shape of the front surface 14a of the Fresnel lens 14 is adjusted for distortion correction. In the example of Fig. 5, the image correction unit 22 deforms an image to correct distortion of the image. These techniques may be used together or combined with each other.

As described above, in the image display apparatus 100 according to the embodiment, the rear surface 14b, 14Tb of the Fresnel lens 14, 14T is adjusted in shape or tilted to prevent incident light from the user side from being specularly reflected by the rear surface 14b, 14Tb and being returned to the user side, thus reducing deterioration in visibility caused by reflection of the user and surroundings of the user in the Fresnel lens 14, 14T.

In particular, the orientation of the flat first surface (rear surface 14b, 14Tb) of the Fresnel lens 14, 14T being non-parallel to the direction perpendicular to the sight line of the user ensures that the user and surroundings of the user can be prevented from being reflected in a displayed image by specular reflection on the rear surface 14b, 14Tb of the Fresnel lens 14, 14T.

The front surface (Fresnel surface) 14a of the Fresnel lens 14 has a shape that removes image distortion. In designing the lens, the shape of the Fresnel surface is adjusted to correct image distortion caused by tilt of the rear surface 14b. Thus, the user can see a normal image through the Fresnel lens 14.

Instead of or in addition to adjustment of the shape of the Fresnel surface, an image to be displayed on the screen of the display unit 12 may be deformed to remove distortion of the image seen through the Fresnel lens 14T. In this case, the user can see a normal image through the Fresnel lens 14T.

The present invention is not limited to the above-described embodiment and modification, and can be variously modified and practiced without departing from the scope of the claims. For example, in the above-described embodiment (Fig. 3) and modification (Fig. 5), only the rear surface 14b, 14Tb of the Fresnel lens 14, 14T is tilted. A Fresnel lens having a front surface and a rear surface that are parallel to each other, or having a constant thickness, may be used, and the entire Fresnel lens may be tilted.

Fig. 7 illustrates an embodiment of a modification of the image display apparatus of Fig. 3. A configuration illustrated in Fig. 7 differs from the configuration in Fig. 3 in that a Fresnel lens 114 replaces the Fresnel lens 14. The entire Fresnel lens 114 is tilted at the same angle as that at which the rear surface 14b of the Fresnel lens 14 in Fig. 3 is tilted. Such a configuration can prevent incident light from the user side from being specularly reflected by a rear surface 114b and being returned to the user side, thus reducing deterioration in visibility that is caused by reflection of the user and surroundings of the user in the Fresnel lens 114.

Furthermore, the Fresnel lens 114 has a front surface (Fresnel surface) 114a, which has a shape that removes image distortion. In designing the lens, the shape of the Fresnel surface is adjusted to correct image distortion caused by tilt of the entire Fresnel lens 114 having the rear surface 114b. Thus, the user can see a normal image through the Fresnel lens 114.

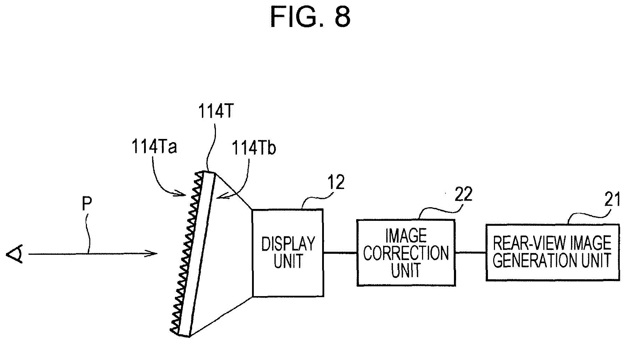

Fig. 8 illustrates an embodiment of a modification of the image display apparatus of Fig. 5. A configuration illustrated in Fig. 8 differs from the configuration in Fig. 5 in that a Fresnel lens 114T replaces the Fresnel lens 14T. The entire Fresnel lens 114T is tilted at the same angle as that at which the rear surface 14Tb of the Fresnel lens 14T in Fig. 5 is tilted. Such a configuration can prevent incident light from the user side from being specularly reflected by a rear surface 114Tb and being returned to the user side, thus reducing deterioration in visibility that is caused by reflection of the user and surroundings of the user in the Fresnel lens 114T.

Furthermore, an image to be displayed on the screen of the display unit 12 is deformed to remove distortion of the image seen through the Fresnel lens 114T. The user can see a normal image through the Fresnel lens 114T.

In each of the embodiments and the modifications described above, an image is seen through the Fresnel lens. The present invention is also applicable to a configuration including a convex lens having a flat first surface and a convex second surface. In this case, deterioration in visibility caused by specular reflection on the flat surface can be prevented. In addition, image distortion can be prevented by modifying the shape of the convex surface or by modifying an image.

In the embodiments and the modifications described above, the present invention is applied to the electronic mirror system installed in the vehicle. The present invention is applicable to any image display apparatus that displays an image by using a convex lens and a display unit in combination and that is used in situations other than in vehicles, as well as an electronic mirror system installed in a vehicle.

As described above, according to the embodiments of the present invention, adjusting the shape or position of a convex lens prevents incident light from the user side from being specularly reflected by the convex lens and being returned to the user side, thus reducing deterioration in visibility that is caused by reflection of the user and surroundings of the user in the convex lens.

## Claims

1. An image display apparatus (100) comprising:
a screen configured to display an image;
image generating means (21) configured to generate an image to be displayed on the screen;
a convex lens (14) disposed at a predetermined distance from the screen;
specular-reflection preventing means that is configured to cause the convex lens to have a shape or position that prevents incident light from a user side where a user sees the image through the convex lens from being specularly reflected to the user side; and
image correcting means that is configured to correct image distortion caused by the specular-reflection preventing means.

2. The apparatus according to Claim 1, wherein the specular-reflection preventing means is configured to cause a flat first surface of the convex lens to be non-parallel to a direction perpendicular to a line of sight of the user.

3. The apparatus according to Claim 1, wherein the specular-reflection preventing means is configured to cause the convex lens as a whole to be non-parallel to a direction perpendicular to a line of sight of the user.

4. The apparatus according to any one of Claims 1 to 3, wherein the image correcting means is configured to cause the convex lens to have a shape that removes image distortion, thereby correcting the image distortion.

5. The apparatus according to any one of Claims 1 to 4, wherein the image correcting means is configured to deform an image to be displayed on the screen to remove distortion of the image seen through the convex lens.

6. The apparatus according to any one of Claims 1 to 5, wherein the convex lens is a Fresnel lens having a flat first surface.

7. The apparatus according to any one of Claims 1 to 5, wherein the convex lens is a convex lens having a flat first surface and a convex second surface.
